# EUROPÄISCHE PATENTANMELDUNG

(11) **EP 2 451 002 A1**
(43) Veröffentlichungstag der Anmeldung: **09.05.2012**
(21) Anmeldenummer: 11184831.3
(22) Anmeldetag: 12.10.2011
(51) Int. Cl.: H01M 10/44, H01M 10/46

(54) **Verfahren und Ladegerät zum Laden von wenigstens zwei Akkumulatoren**

(30) Priorität: 08.11.2010 DE 102010043585
(71) Anmelder: HILTI Aktiengesellschaft, 9494 Schaan (LI)
(72) Erfinder: Ljubojevic, Dragomir, 9000 St. Gallen (CH); Huber, Franz, 86865 Markt Wald (DE); Sever, Eduard, 6713 Ludesch (AT)

(57) **Zusammenfassung**

Es wird ein Verfahren zum Laden von wenigstens zwei Akkumulatoren (1..4) mit jeweils zumindest einer Zelle angegeben, wobei in einer ersten Ladephase (P1) Akkumulatoren (1..4) sequentiell bis zu einem ersten Ladezustand (Z1) und danach Akkumulatoren (1..4) in einer zweiten Ladephase (P2) sequentiell bis zu einem zweiten, höheren Ladezustand (Z2) geladen werden. Die erste Ladephase (P1) wird dabei mit dem Akkumulator (3) mit dem niedrigsten Ladezustand (L3) begonnen. Weiterhin wird ein Ladegerät zur Durchführung des erfindungsgemässen Verfahrens sowie ein mobiles Elektrogerät (11), umfassend ein solches Ladegerät angegeben.

## Beschreibung

Die Erfindung betrifft ein Verfahren zum Laden von wenigstens zwei Akkumulatoren mit jeweils zumindest einer Zelle, wobei in einer ersten Ladephase Akkumulatoren sequentiell bis zu einem ersten Ladezustand und danach Akkumulatoren in einer zweiten Ladephase sequentiell bis zu einem zweiten, höheren Ladezustand geladen werden. Weiterhin betrifft die Erfindung ein Ladegerät zum Laden von wenigstens zwei Akkumulatoren mit jeweils zumindest einer Zelle, umfassend eine Steuerung, welche dazu eingerichtet ist, in einer ersten Ladephase Akkumulatoren sequentiell bis zu einem ersten Ladezustand und danach Akkumulatoren in einer zweiten Ladephase sequentiell bis zu einem zweiten, höheren Ladezustand zu laden. Darüber hinaus betrifft die Erfindung ein mobiles Elektrogerät, umfassend einen elektrischen Verbraucher und einen Netzanschluss sowie ein Ladegerät der genannten Art. Schliesslich betrifft die Erfindung ein Set, umfassend wenigstens ein Elektrohandgerät und wenigstens ein mobiles Elektrogerät der genannten Art sowie mehrere zwischen dem zumindest einen Elektrohandgerät und dem zumindest einen mobilen Elektrogerät austauschbaren Akkumulatoren.

Durch die stetig steigende Zahl mobiler, elektrisch betriebener Geräte steigt auch der Bedarf an Ladegeräten für die zum Betrieb dieser Geräte notwendigen Akkumulatoren (umgangssprachlich auch als "Batterien" bezeichnet). Beispielsweise offenbart die DE 10 2009 001 670 A1 ein Verfahren zum Laden einer Anzahl von Akkumulatoren, welche für ein Laden in einer ersten Phase bei konstantem Strom und ansteigender Spannung und in einer auf die erste Phase folgenden zweiten Phase bei konstanter Spannung und abfallendem Strom ausgebildet sind. Bei dem bekannten Verfahren werden die Akkumulatoren sequentiell geladen, sodass jeweils nur einer der Akkumulatoren geladen wird. Dabei wird ein Akkumulator in der ersten Phase geladen, bei Erreichen einer vorgegebenen Grenzspannung wird das Laden des betreffenden Akkumulators in der ersten Phase unterbrochen, und das Laden wird mit einem weiteren Akkumulator fortgesetzt.

Weiterhin ist aus der EP 1 419 723 B1 ein Staubsauger bekannt, welcher mehrere Akkuschächte für Akkumulatoren aufweist, die sowohl in dem genannten Staubsauger, als auch in anderen Elektrohandgeräten verwendet werden können. Der Staubsauger kann sowohl am Stromnetz betrieben werden als auch autark von den Akkumulatoren versorgt werden.

Nachteilig an den bekannten Ladeschaltungen ist, dass sie nicht für einen möglichst raschen Energietransfer in die Akkumulatoren optimiert sind. Zwar schlägt die DE 10 2009 001 670 A1 vor, in einer ersten Phase alle Akkumulatoren bis zu einem gewissen Ladezustand zu laden und diese erst in einer zweiten Phase voll aufzuladen. Leider ist mit dieser Vorgangsweise nicht das Optimum eines möglichst raschen Energietransfers erreicht.

Die Aufgabe der Erfindung ist es daher, ein verbessertes Verfahren und ein verbessertes Ladegerät zum Laden von wenigstens zwei Akkumulatoren zu schaffen. Insbesondere soll dabei der Energietransfer beschleunigt werden. Darüber hinaus ist es die Aufgabe der Erfindung, ein verbessertes mobiles Elektrogerät sowie ein verbessertes Set umfassend ein Elektrohandgerät und ein mobiles Elektrogerät der genannten Art zu schaffen.

Erfindungsgemäss wird diese Aufgabe mit einem Verfahren der eingangs genannten Art gelöst, bei dem die erste Ladephase mit dem Akkumulator mit dem niedrigsten Ladezustand begonnen wird.

Die Aufgabe der Erfindung wird auch mit einem Ladegerät der eingangs genannten Art gelöst, bei dem die Steuerung dazu eingerichtet ist, die erste Ladephase mit dem Akkumulator mit dem niedrigsten Ladezustand zu beginnen.

Weiterhin wird die Aufgabe der Erfindung mit einem mobilen Elektrogerät der eingangs genannten Art gelöst, zusätzlich umfassend ein erfindungsgemässes Ladegerät und eine Umschalteinrichtung, welche dazu vorbereitet ist, den Verbraucher und das Ladegerät mit dem Netzanschluss zu verbinden, wenn das Elektrohandgerät an das Netz angeschlossen ist, und andernfalls einen in dem Akkuschacht eingelegten Akkumulator mit dem Verbraucher zu verbinden.

Unter dem Begriff eines "mobilen Elektrogerätes" wird in diesem Zusammenhang ein Elektrogerät verstanden, welches auch im Betrieb von einer Arbeitsstelle zu einer anderen Arbeitsstelle versetzbar bzw. verschiebbar ist. Schliesslich wird die Aufgabe der Erfindung durch ein Set der eingangs genannten Art gelöst, zusätzlich umfassend wenigstens ein erfindungsgemässes mobiles Elektrogerät und mehrere zwischen dem zumindest einen Elektrohandgerät und dem zumindest einen mobilen Elektrogerät austauschbaren Akkumulatoren.

Erfindungsgemäss wird damit erreicht, dass der Energietransfer in die Akkumulatoren möglichst rasch vonstattengeht. Anders als im Stand der Technik wird die Ladung nämlich nicht bei irgendeinem Akkumulator oder bei dem Akkumulator, welcher zufällig in den ersten Akkuschacht eingelegt ist, gestartet, sondern bei dem Akkumulator, welcher den niedrigsten Ladezustand aufweist. Auf diese Weise kann der Energietransfer initial sehr rasch erfolgen, sodass die Akkumulatoren schon nach kurzer Zeit eine "Grundladung" aufweisen.

Vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es, wenn in der ersten Ladephase Akkumulatoren mit einem Ladezustand, der den ersten Ladezustand unterschreitet, und in der zweiten Ladephase Akkumulatoren mit einem Ladezustand, der den zweiten, höheren Ladezustand unterschreitet, geladen werden. In der ersten Ladephase brauchen nur diejenigen Akkumulatoren geladen werden, deren Ladezustand vor Beginn der ersten Ladephase unter dem Ziel-Ladezustand nach Beendigung der ersten Ladephase liegt. Ist ein Akkumulator beispielsweise zu 90% aufgeladen, so braucht er in der ersten Phase (in dem vorgenannten Beispiel mit dem Ziel-Ladezustand von 75%) natürlich nicht geladen oder gar auf 75% entladen werden.

Besonders vorteilhaft ist es zudem, wenn in einer weiteren Ladephase die Akkumulatoren mit einem Ladezustand, der einen weiteren, höheren Ladezustand unterschreitet, sequentiell bis zu dem weiteren, höheren Ladezustand geladen werden. Mit einer oder mehreren weiteren Ladephasen werden alle Akkumulatoren bis auf 100% ihrer Ladekapazität geladen. Die weiteren Ladephasen werden mit jeweils steigenden Ladezuständen wiederholt, bis alle Akkumulatoren voll aufgeladen sind. Beispielsweise können die Akkumulatoren in einer ersten Ladephase auf 65% aufgeladen werden, in einer zweiten Ladephase auf 80% und dann auf 100%.
das Verfahren beendet ist, wenn alle Akkumulatoren einen Ladezustand von 100 % aufweisen. Je nach Ladezustand der in den Akkuschächten eingelegten Akkumulatoren, kann der Ladezustand von 100% bereits nach der ersten, zweiten oder einer der weiteren Ladephasen erreicht werden. Da das Verfahren nach dem Erreichen eines Ladezustandes von 100 % beendet wird, wird keine zugeführte Energie nutzlos verbraucht.

Besonders vorteilhaft ist es, wenn die Akkumulatoren in der ersten Ladephase in aufsteigender Reihenfolge ihrer Ladezustände vor Beginn der ersten Ladephase geladen werden. Hier wird die erste Ladephase nicht nur beim Akkumulator mit dem geringsten Ladezustand begonnen, sondern es werden auch alle weiteren Akkumulatoren in der Reihenfolge ihrer Ladezustände vom am wenigsten geladenen zu dem am meisten geladenen Akkumulator aufgeladen.

Besonders vorteilhaft ist es auch, wenn die Akkumulatoren in der zweiten Ladephase sowie in den weiteren Ladephasen in der aufsteigenden Reihenfolge der Ladezustände vor Beginn der ersten Ladephase geladen werden. Dies ermöglicht ein besonders effizientes Laden der Akkumulatoren.

Vorteilhaft ist es zudem, wenn der erste Ladezustand, der zweite Ladezustand und/oder die weiteren Ladezustände als prozentualer Wert vorgegeben werden. Beispielsweise können alle Akkumulatoren in der ersten Ladephase sequentiell bis zu 75% aufgeladen werden und danach alle Akkumulatoren in einer zweiten oder weiteren Ladephase sequentiell auf 100% aufgeladen werden. Vorteilhaft ist dabei, dass die Akkumulatoren in der ersten Ladephase besonders aufnahmefähig sind, und die Grundladung daher sehr schnell erfolgen kann. Selbstverständlich sind die angegebenen Werte nur illustrativ zu sehen. Natürlich können auch andere Werte gewählt werden.

In einer alternativen Ausführung oder ergänzend dazu ist es weiter vorteilhaft, wenn der erste Ladezustand, der zweite Ladezustand und/oder die weiteren Ladezustände dem Ladezustand eines Akkumulators, der nicht den niedrigsten Ladezustand vor Beginn der Ladephase aufweist, entsprechen.

Diese Variante der Erfindung soll anhand eines Beispiels verdeutlicht werden, bei dem drei Akkumulatoren mit unterschiedlichen initialen Ladezuständen aufgeladen werden. Ein erster Akkumulator sei dabei zu 75% aufgeladen, ein zweiter Akkumulator zu 50% und ein dritter Akkumulator zu 90%. Erfindungsgemäss wird das Laden mit dem zweiten Akkumulator begonnen. Dieser wird in einer ersten Ladephase auf den zweitniedrigsten Ladezustand der Akkumulatoren, das sind im konkreten Beispiel die 75% des ersten Akkumulators aufgeladen. Sodann werden der zweite und der dritte Akkumulator in einer zweiten Ladephase auf 90% aufgeladen. Schliesslich werden alle Akkumulatoren auf 100% aufgeladen.

Günstig ist es, wenn das Ladegerät eine Messeinrichtung umfasst, welche dazu vorbereitet ist, den Ladezustand der Akkumulatoren vor Beginn der ersten Ladephase zu erfassen. Auf diese Weise kann das Ladegerät feststellen, mit welchem Akkumulator das Laden begonnen werden soll.

Vorteilhaft ist es auch, wenn das Ladegerät wenigstens zwei Akkuschächte, welche auch als "Ladeschalen" bzw. "Ladeschächte" bezeichnet werden, umfasst, in die jeweils ein Akkumulator werkzeuglos einlegbar beziehungsweise aus dieser/diesem entnehmbar ist. Auf diese Weise ist das Ladegerät besonders leicht bedienbar. Als Akkuschacht ist im Rahmen der Erfindung jede Art von Vorrichtung zu verstehen, in der ein Akkumulator zum Zwecke des Energietransfers eingelegt bzw. eingesteckt werden kann. Prinzipiell - auch wenn dies weniger komfortabel ist - eignen sich für diesen Zweck auch Ladekabel.

Vorteilhaft ist es weiterhin, wenn im mobilen Elektrogerät im Strompfad zwischen den Akkuschächten und dem Verbraucher Spannungswandler angeordnet sind. Bei dieser Variante der Erfindung können Akkumulatoren verschiedener Spannung zum Betrieb des mobilen Elektrogeräts verwendet werden. Mit Hilfe der Spannungswandler kann die Spannung der Akkumulatoren auf eine für den Verbraucher nötige Spannung transformiert werden. Je nach Art des Verbrauchers können DC/DC-Wandler und/oder DC/AC-Wandler eingesetzt werden.

Vorteilhaft ist es zudem, wenn das mobile Elektrogerät als Staubsauger ausgebildet ist. Insbesondere ist dies von Vorteil, wenn der Staubsauger Teil eines Sets ist, welches zusätzlich wenigstens ein Elektrohandgerät sowie mehrere zwischen dem zumindest einen Elektrohandgerät und dem zumindest einen mobilen Elektrogerät austauschbaren Akkumulatoren umfasst. Das Set besteht aus somit aus mehreren Modulen, welche bedarfsweise miteinander kombinierbar sind. Zumeist besteht ein Staubsauger aus einem fahrbaren Grundteil und einer mit diesem über einen Saugschlauch verbundenen Saugdüse. Da der Grundteil in der Regel nicht angehoben werden muss, sondern beim Staubsaugen bloss hinterher gezogen wird, eignet sich ein Staubsauger sehr gut als zentrale Ladestation der relativ schweren Akkumulatoren. Auf diese Weise können Akkumulatoren auf der Baustelle oder im Haushalt komfortabel geladen werden. Einerseits kann ein leerer Akkumulator eines Elektrohandgeräts (z.B. Akkuschrauber, Akkubohrmaschine, Akkusäge, Akkuschleifmaschine, Akkuhobelmaschine, Akku-Tischsauger, Akkuscheinwerfer, Akkuradio, usw.) gegen einen vollen aus dem Staubsauger getauscht werden. Andererseits kann der Staubsauger aber auch autark, d.h. abseits des Stromnetzes betrieben werden. Durch die erfindungsgemässen Massnahmen werden die Akkumulatoren möglichst rasch auf einen Grundzustand geladen, sodass diese rasch wieder einsatzbereit sind. Der Vorteil der Erfindung tritt hier somit besonders hervor. Diese Vorteile sind aber nicht auf Staubsauger beschränkt, sondern gelten auch für weitere verschiebbare bzw. fahrbare Geräte bzw. Geräte, deren Grundteil nur vergleichsweise selten bewegt wird. Ein weiteres Beispiel für ein solches Gerät ist ein Hochdruckreiniger.

An dieser Stelle wird angemerkt, dass die für das erfindungsgemässe Verfahren angeführten Varianten und daraus resultierenden Vorteile sinngemäss auch für das erfindungsgemässe Ladegerät, das erfindungsgemässe mobile Elektrogerät sowie für das erfindungsgemässe Set gelten und umgekehrt.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: eine erste Variante der Erfindung in Form eines Ladediagramms für vier Akkumulatoren;
- Fig. 2: eine zweite Variante der Erfindung in Form eines abgewandelten Ladediagramms für vier Akkumulatoren;
- Fig. 3: eine Schaltung zum Laden von vier Akkumulatoren und
- Fig. 4: ein erfindungsgemässes Set.

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

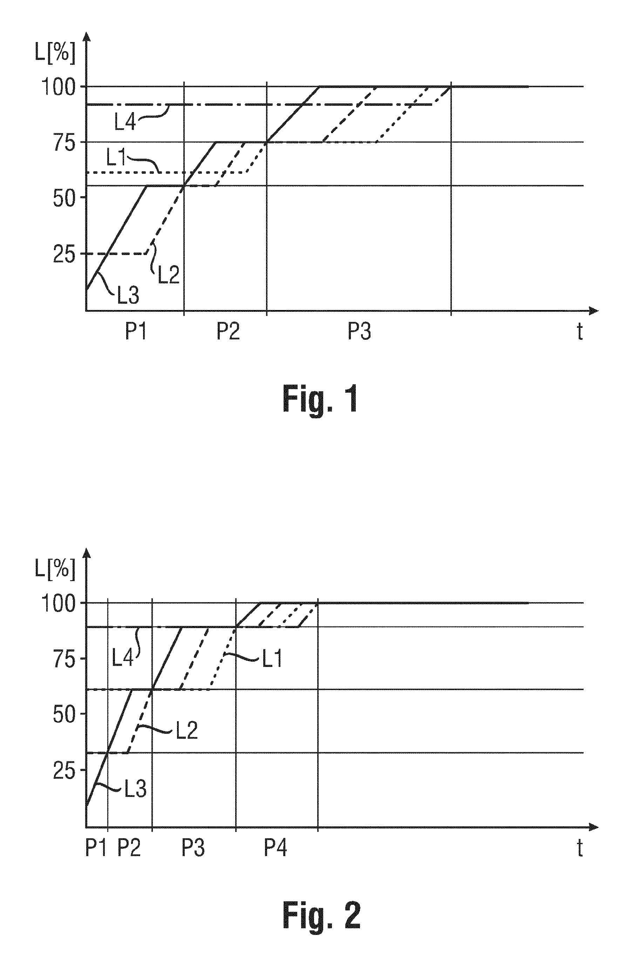

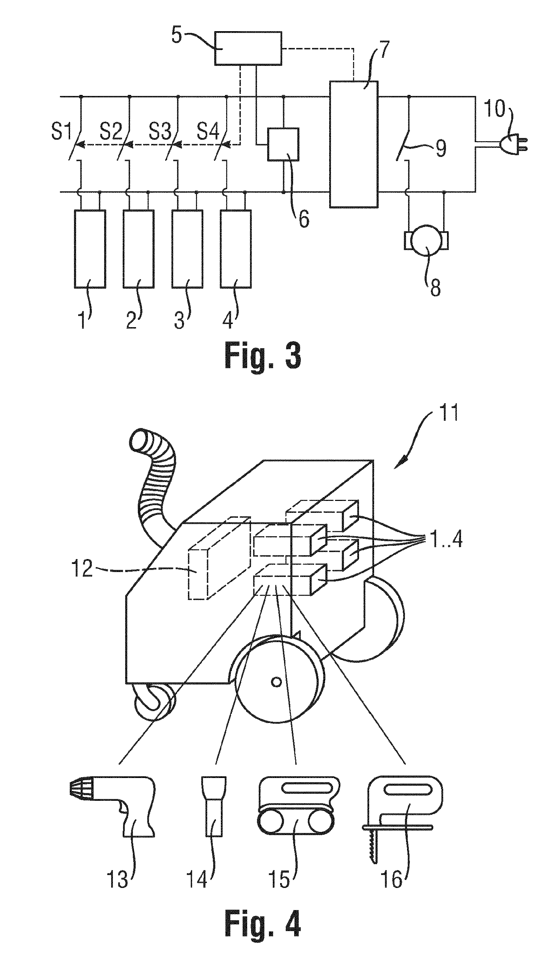

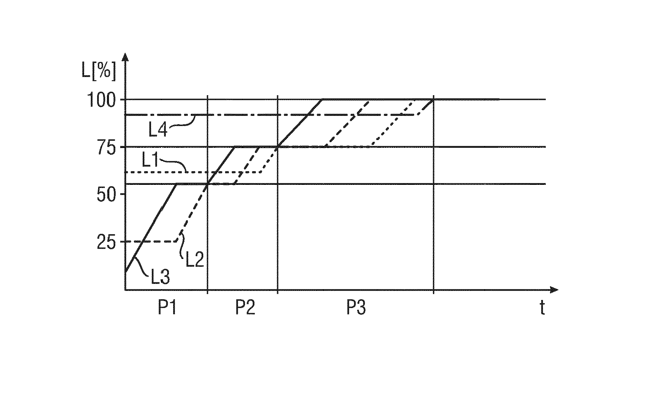

Fig. 1 zeigt eine erste Variante der Erfindung in Form eines Ladediagramms für vier Akkumulatoren 1..4 (siehe auch Fig. 3). In dem Diagramm ist der Ladezustand L in Prozent der Akkumulatoren 1..4 über der Zeit t aufgetragen. Dabei zeigt die punktierte Linie den Ladezustand L1 des ersten Akkumulators 1, die strichlierte Linie den Ladezustand L2 des zweiten Akkumulators 2, die durchgezogene Linie den Ladezustand L3 des dritten Akkumulators 3 und die strichpunktierte Linie den Ladezustand L4 des vierten Akkumulators 4.

Zu Beginn des Ladevorgangs weist der erste Akkumulator 1 einen Ladezustand L1 von etwa 65%, der zweite Akkumulator 2 einen Ladezustand L2 von etwa 25%, der dritte Akkumulator 3 einen Ladezustand L3 von etwa 10% und der vierte Akkumulator 4 einen Ladezustand L4 von etwa 90% auf.

In einer ersten Ladephase P1 werden nun alle Akkumulatoren 1..4 sequentiell bis zu einem ersten Ladezustand Z1 (hier zirka 60%) und danach alle Akkumulatoren in einer zweiten Ladephase P2 sequentiell bis zu einem zweiten, höheren Ladezustand Z2 (hier 75%) geladen, wobei die erste Ladephase P1 mit dem Akkumulator mit dem niedrigsten Ladezustand (hier der dritte Akkumulator 3) begonnen wird. In der ersten Ladephase P1 wird also der dritte Akkumulator 3 und dann der zweite Akkumulator 2 bis zu einem ersten Ladezustand von 60% aufgeladen. Der erste Akkumulator 1 und der vierte Akkumulator 4 bleiben vorerst unangetastet, da deren initialer Ladezustand L1, L4 ohnehin über 60% liegt.

Nach demselben Schema werden in der zweiten Ladephase P2 die Akkumulatoren 3, 2 und 1 bis auf 75% aufgeladen. Schliesslich werden die Akkumulatoren 3, 2, 1 und 4 bis auf 100% aufgeladen.

Wie aus der Fig. 1 leicht ersichtlich ist, wird das erfindungsgemässe Ladeverfahren mit jeweils steigenden Ladezuständen rekursiv wiederholt bis alle Akkumulatoren 1..4 voll aufgeladen sind. Innerhalb der Ladephasen P1..P3 werden die Akkumulatoren 1..4 zudem in aufsteigender Reihenfolge ihrer Ladezustände geladen. Beispielsweise wird der erste Akkumulator 1 in der zweiten Ladephase P2 zuletzt geladen. Im vorliegenden Beispiel wird die Reihenfolge der Akkumulatoren 2 und 3 in der zweiten Phase P2 aus der ersten Phase P1 übernommen, das heisst in der zweiten Ladephase P2 wird der dritte Akkumulator 3 vor dem zweiten Akkumulator 2 geladen. Dies ist aber nicht zwingend der Fall, da beide Akkumulatoren 2 und 3 bereits zu Beginn der zweiten Ladephase P2 ohnehin denselben Ladezustand aufweisen. Dasselbe gilt für die Akkumulatoren 1, 2 und 3 in der dritten Ladephase P3.

Aus dem Diagramm in Fig. 1 ist der erfindungsgemässe Gedanke, nämlich das möglichst rasche Laden der Akkumulatoren 1..4 auf einen Grundzustand, klar ersichtlich. Erkennbar ist weiterhin auch, dass der Ladestrom mit zunehmenden Ladezustand L der Akkumulatoren 1..4 abnimmt, sodass die Ladekurven immer flacher verlaufen. Dies bedeutet, dass die Ladezeit von einem Ladezustand von 25% auf 50% kürzer ist als die Ladezeit von 75% auf 100%. Auch aus diesem Grund ist das erfindungsgemässe Verfahren von Vorteil, weil dieser Effekt ausgenützt wird, um die Energie möglichst rasch in die Akkumulatoren 1..4 zu transferieren.

Fig. 2 zeigt nun eine etwas abgewandelte Form des in der Fig. 1 dargestellten Ladediagramms. Im Unterschied dazu sind für n Akkumulatoren n Ladephasen vorgesehen, das heisst im konkreten Fall sind vier Ladephasen P1..P4 vorgesehen. Zudem entspricht der Ladezustand nach Beendigung einer Ladephase P1..P4 dem zweitniedrigsten Ladezustand der Akkumulatoren 1..4 vor Beginn dieser Ladephase P1..P4. Konkret bedeutet dies, dass der Ladezustand L nach Beendigung der ersten Ladephase P1 dem Ladezustand L2 des zweiten Akkumulators 2 vor Beginn der ersten Ladephase P1 entspricht, nämlich 30%. Gleichermassen entspricht der Ladezustand L nach Beendigung der zweiten Ladephase P2 dem Ladezustand L1 des ersten Akkumulators 1 vor Beginn der zweiten Ladephase P2, nämlich 60%, usw. Auf diese Weise können in der kürzest möglichen Zeit zwei bzw. drei Akkumulatoren 1..4 aufdense!ben Ladezustand L geladen werden. Bei Vollladung ergibt sich dagegen kein Vorteil gegenüber dem in Fig. 1 dargestellten Verfahren.

Fig. 3 zeigt eine Schaltung zum Laden von vier Akkumulatoren 1..4. Diese Schaltung umfasst eine Steuerung 5, welche dazu eingerichtet ist, das erfindungsgemässe Verfahren, d.h. z.B. den in der Fig. 1 oder Fig. 2 dargestellten Ablauf, zu steuern. Zu diesem Zweck umfasst die Schaltung auch eine Messeinrichtung 6, welche dazu vorbereitet ist, den Ladezustand L1..L4 der Akkumulatoren 1..4 zu erfassen. Darüber hinaus umfasst die Schaltung einen Laderegler 7 sowie einen Netzanschluss 10. Zudem wird angenommen, dass es sich bei dem in der Fig. 3 dargestellten Gerät um ein akkubetriebenes Elektrogerät (z.B. einen Staubsauger) handelt, sodass die Schaltung auch einen Verbraucher in Form eines Motors 8 sowie einen Motorschalter 9 umfasst. Natürlich sind die beiden letztgenannten Komponenten 8 und 9 rein optional und tragen nichts zum erfindungsgemässen Ladeverfahren bei.

Die Funktion der in der Fig. 3 dargestellten Schaltung ist nun wie folgt, wobei der Einfachheit halber mit dem reinen Ladebetrieb begonnen wird, in dem der Netzanschluss 10 mit einem Stromnetz verbunden und der Schalter 9 offen ist.

Vor dem eigentlichen Laden wird der Ladezustand L1..L4 der Akkumulatoren 1..4 ermittelt. Dazu steuert die Steuerung 5 den Laderegler 7 in einen inaktiven Zustand, aktiviert nacheinander die Schalter S1..S4 und ermittelt mit der Messeinrichtung 6 den Ladezustand L1..L4 der Akkumulatoren 1..4. Im einfachsten Fall handelt es sich bei der Messeinrichtung 6 um ein Voltmeter, selbstverständlich sind aber auch komplexere Geräte beziehungsweise Verfahren zur Ermittlung eines Ladezustands L denkbar. Bezugnehmend auf Fig. 1 oder Fig. 2 stellt die Steuerung 5 nun fest, dass der dritte Akkumulator 3 den niedrigsten Ladezustand L der Akkumulatoren 1..4 aufweist. Daher schliesst die Steuerung 5 den Schalter S3 und aktiviert den Laderegler 7. Während des Ladens erfasst die Messeinrichtung 6 laufend den Ladezustand L3 des dritten Akkumulators 3. Sobald der dritte Akkumulator 3 auf den End-Ladezustand Z1 der ersten Ladephase P1 geladen ist, wird der Schalter S3 geöffnet und der Schalter S2 geschlossen, um den zweiten Akkumulator 2 auf denselben Ladezustand L zu laden. Dieser Ablauf wird entsprechend dem in Fig. 1 oder Fig. 2 dargestellten Diagramm so lange wiederholt bzw. auf die anderen Akkumulatoren 1 und 4 erweitert, bis alle Akkumulatoren 1..4 vollständig aufgeladen sind. Wie leicht erkennbar ist, hängt die Reihenfolge der Akkumulatoren 1..4 beim Laden nicht wie im Stand der Technik davon ab, in welchem Akkuschacht der betreffende Akkumulator 1..4 eingelegt ist, sondern die Reihenfolge wird wie erwähnt nach dem Ladezustand L vorgenommen.

Während das Gerät mit dem Netz verbunden ist, kann auch der Motor 8 mit elektrischer Energie aus dem Netz versorgt werden. Wird das Gerät getrennt, so kann in an sich bekannter Weise Energie aus den Akkumulatoren 1..4 bezogen werden. Um dazu Akkumulatoren mit verschiedener Nennspannung beziehungsweise auch unterschiedlichem Ladezustand an das vom Motor 8 benötigte Spannungsniveau zu bringen, können im Strompfad zwischen den in den Akkuschächten eingelegten Akkumulatoren 1..4 und dem Motor 8 nicht dargestellte Spannungswandler angeordnet sein. Werden die Akkumulatoren 1..4 sequentiell entladen, z.B. beginnend bei dem Akkumulator 1..4 mit dem höchsten Ladezustand L1..L4 und gereiht nach fallenden Ladezuständen L1..L4 ist prinzipiell ein Spannungswandler ausreichend, der die Spannung des durch einen der Schalter S1..S4 ausgewählten Akkumulators 1..4 auf die beim Motor 8 benötigte Spannung transformiert. Werden mehrere oder alle Akkumulatoren 1..4 simultan entladen, so ist für jeden Akkumulator 1..4 ein eigener Spannungswandler vorzusehen, die ausgangs- bzw. motorseitig an einem gemeinsamen Sammelpunkt zusammengeschlossen werden.

Fig. 4 zeigt nun ein Beispiel für ein erfindungsgemässes Set umfassend wenigstens ein mobiles Elektrogerät, hier gebildet durch einen Staubsauger 11, und wenigstens vier Akkumulatoren 1..4. Vorteilhaft umfasst das Set wenigstens ein Elektrohandgerät mit einem Akkuschacht zur Aufnahme eines der Akkumulatoren 1..4. Rein beispielhaft sind ein Akkuschrauber 13, eine Taschenlampe 14, ein Bandschleifer 15 sowie eine Stichsäge 16 als Elektrohandgeräte des Sets vorgesehen. Im Staubsauger 11 können bis zu vier Akkumulatoren 1..4 eingeschoben werden, die dort geladen bzw. zum Betrieb des Staubsaugers 11 verwendet werden können. Im vorderen Teil des Staubsaugers 11 befindet sich darüber hinaus eine Sauger-Steuerung 12, welche für die Steuerung des Staubsaugers 11 vorgesehen ist und zum Beispiel auch die in Fig. 3 dargestellte Schaltung umfassen kann. Die Vorteile der Erfindung treten bei einem solchen Set besonders hervor.

Abschliessend wird darauf hingewiesen, dass die Figuren teilweise unmasstäblich und auch stark vereinfacht gezeichnet sind. Eine real ausgeführte Schaltung (Fig. 3) bzw. ein real ausgeführter Staubsauger (Fig. 4) können daher mehr Bestandteile als dargestellt enthalten und somit deutlich komplexer aufgebaut sein, als dies in den Figuren dargestellt ist. Teile der in den Figuren dargestellten Anordnungen können darüber hinaus auch die Basis für unabhängige Erfindungen bilden.

Die folgende Bezugszeichenliste und die technischen Lehren der Patentansprüche gelten als im Rahmen der Offenbarung liegend und offenbaren für den Fachmann alleine oder in Zusammenschau mit den Figuren weitere Details der Erfindung und ihrer Ausführungsbeispiele.

### Bezugszeichenliste

- 1..4: Akkumulator
- 5: Steuerung
- 6: Messeinrichtung
- 7: Laderegler
- 8: Verbraucher (Motor)
- 9: Motorschalter
- 10: Netzanschluss
- 11: Staubsauger
- 12: Sauger-Steuerung
- 13: Akkuschrauber
- 14: Taschenlampe
- 15: Bandschleifer
- 16: Stichsäge
- L1 ..L4: Ladezustand Akkumulator 1..4
- P1..P4: Ladephasen
- Z1..Z4: erster, zweier, dritter, vierter Ladezustand
- t: Zeit

## Patentansprüche

1. Verfahren zum Laden von wenigstens zwei Akkumulatoren (1..4) mit jeweils zumindest einer Zelle, wobei in einer ersten Ladephase (P1) Akkumulatoren (1..4) sequentiell bis zu einem ersten Ladezustand (Z1) und danach in einer zweiten Ladephase (P2) Akkumulatoren (1..4) sequentiell bis zu einem zweiten, höheren Ladezustand (Z2) geladen werden, **dadurch gekennzeichnet, dass**
die erste Ladephase (P1) mit dem Akkumulator (3) mit dem niedrigsten Ladezustand (L3) begonnen wird.

2. Verfahren nach Anspruch 1, **dadurch gekennzeichnet, dass** in der ersten Ladephase (P1) Akkumulatoren (1..4) mit einem Ladezustand (L1..L4), der den ersten Ladezustand (Z1) unterschreitet, und in der zweiten Ladephase (P2) Akkumulatoren (1..4) mit einem Ladezustand (L1..L4), der den zweiten, höheren Ladezustand (L2) unterschreitet, geladen werden.

3. Verfahren nach einem der Ansprüche 1 bis 2, **dadurch gekennzeichnet, dass** in einer weiteren Ladephase (P3, P4) die Akkumulatoren (1..4) mit einem Ladezustand (L1..L4), der einen weiteren, höheren Ladezustand (Z3) unterschreitet, sequentiell bis zu dem weiteren, höheren Ladezustand (Z3) geladen werden.

4. Verfahren nach einem der Ansprüche 1 oder 3, **dadurch gekennzeichnet, dass** das Verfahren beendet ist, wenn alle Akkumulatoren (1..4) einen Ladezustand (L1..L4) von 100 % aufweisen.

5. Verfahren nach einem der Ansprüche 1 bis 4, **dadurch gekennzeichnet, dass** die Akkumulatoren (1..4) in der ersten Ladephase (P1) in aufsteigender Reihenfolge ihrer Ladezustände (L3, L2, L1, L4) vor Beginn der ersten Ladephase (P1) geladen werden.

6. Verfahren nach Anspruch 4, **dadurch gekennzeichnet, dass** die Akkumulatoren (1..4) in der zweiten Ladephase (P2) sowie in den weiteren Ladephasen (P3, P4) in der aufsteigenden Reihenfolge der Ladezustände (L3, L2, L1, L4) vor Beginn der ersten Ladephase (P1) geladen werden.

7. Verfahren nach einem der Ansprüche 1 bis 6, **dadurch gekennzeichnet, dass** der erste Ladezustand (Z1), der zweite Ladezustand (Z2) und/oder die weiteren Ladezustände (Z3..Z4) als prozentualer Wert vorgegeben werden und/oder dem Ladezustand (L1, L2, L4) eines Akkumulators (1, 2, 4), der nicht den niedrigsten Ladezustand vor Beginn der Ladephase (P1..P4) aufweist, entsprechen.

8. Ladegerät zum Laden von wenigstens zwei Akkumulatoren (1..4) mit jeweils zumindest einer Zelle, umfassend eine Steuerung (5), welche dazu eingerichtet ist, in einer ersten Ladephase (P1) alle Akkumulatoren (1..4), deren Ladezustand (11..14) einen ersten Ladezustand (L1) unterschreitet, sequentiell bis zu dem ersten Ladezustand (L1) und danach alle Akkumulatoren (1..4), deren Ladezustand (11..14) einen zweiten Ladezustand (L2) unterschreitet, in einer zweiten Ladephase (P2) sequentiell bis zu dem zweiten, höheren Ladezustand (L2) zu laden, **dadurch gekennzeichnet, dass**
die Steuerung (5) dazu eingerichtet ist, die erste Ladephase (P1) mit dem Akkumulator (3) mit dem niedrigsten Ladezustand (13) zu beginnen.

9. Ladegerät nach Anspruch 8, **dadurch gekennzeichnet, dass** die Steuerung dazu eingereichtet ist, in der ersten Ladephase (P1) alle Akkumulatoren (1..4), deren Ladezustand (L1..L4) den ersten Ladezustand (Z1) unterschreitet, und in der zweiten Ladephase (P2) alle Akkumulatoren (1..4), deren Ladezustand (L1..L4) den zweiten, höheren Ladezustand (L2) unterschreitet, zu laden.

10. Ladegerät nach Anspruch 6, **dadurch gekennzeichnet, dass** die Steuerung (5) dazu eingerichtet ist, die Akkumulatoren (1..4) in der ersten Ladephase (P1) in aufsteigender Reihenfolge ihrer Ladezustände (13, 12, 11, 14) zu laden, wobei vorzugsweise diese Reihenfolge in den nachfolgenden Ladephasen (P2, P3, P4) beibehalten wird.

11. Ladegerät nach Anspruch 6 oder 7, **gekennzeichnet durch** eine Messeinrichtung (6), welche dazu vorbereitet ist, den Ladezustand (L1..L4) der Akkumulatoren (1..4) vor Beginn der ersten Ladephase (P1) zu erfassen.

12. Ladegerät nach einem der Ansprüche 6 bis 8, **gekennzeichnet durch** wenigstens zwei Akkuschächte (3), in die jeweils ein Akkumulator (1..4) werkzeuglos einlegbar beziehungsweise aus diesen entnehmbar ist.

13. Mobiles Elektrogerät (11), umfassend einen elektrischen Verbraucher (8) und einen Netzanschluss (10), **gekennzeichnet durch**
ein Ladegerät nach Anspruch 9 und eine Umschalteinrichtung, welche dazu vorbereitet ist, den Verbraucher (8) und das Ladegerät mit dem Netzanschluss (10) zu verbinden, wenn das mobile Elektrogerät (11) an das Netz angeschlossen ist, und andernfalls einen in den Akkuschacht (3) eingelegten Akkumulator (1..4) mit dem Verbraucher (8) zu verbinden.

14. Mobiles Elektrogerät (11) nach Anspruch 9, **dadurch gekennzeichnet, dass** im Strompfad zwischen den Akkuschächten (3) und dem Verbraucher (8) Spannungswandler angeordnet sind.

15. Mobiles Elektrogerät nach Anspruch 10 oder 11, **dadurch gekennzeichnet, dass** dieses als Staubsauger (11) ausgebildet ist.

16. Set umfassend ein mobiles Elektrogerät (11) nach einem der Ansprüche 10 bis 12 und zumindest einen austauschbaren Akkumulator (1..4).

17. Set nach Anspruch 13, **gekennzeichnet durch** wenigstens ein Elektrohandgerät (13..16) mit einem Akkuschacht zur Aufnahme des zumindest einen Akkumulators (1..4).
